# EUROPÄISCHE PATENTSCHRIFT

(11) **EP 3 995 391 B1**
(45) Veröffentlichungstag und Bekanntmachung des Hinweises auf die Patenterteilung: **21.02.2024**
(21) Anmeldenummer: 21206021.4
(22) Anmeldetag: 02.11.2021
(51) Int. Cl.: B63B 39/06, B63H 13/00

(54) **WASSERFAHRZEUG UND VERFAHREN**
WATER VEHICLE AND METHOD
EMBARCATION ET PROCÉDÉ

(30) Priorität: 02.11.2020 DE 102020128805
(43) Veröffentlichungstag der Anmeldung: 11.05.2022
(73) Patentinhaber: CargoKite GmbH, 80538 München (DE)
(72) Erfinder: Bischoff, Marcus, 81679 München (DE)
(74) Vertreter: Horn Kleimann Waitzhofer Schmid-Dreyer Patent- und Rechtsanwälte PartG mbB

(56) Entgegenhaltungen:
- EP-B1- 1 313 642
- DE-U1-202016 004 090
- GB-A- 2 334 004
- US-A1- 2007 157 864

## Beschreibung

Die vorliegende Erfindung betrifft ein Wasserfahrzeug und ein Verfahren zum Steuern eines derartigen Wasserfahrzeugs.

In den letzten Jahren ist die ökologische Nachhaltigkeit zu einem wichtigen politischen Anliegen im globalen Seeverkehr geworden, und umweltbedingte Regulierungen beeinflussen zunehmend die Dynamik des Schifffahrtmarkts. Zum Erreichen der auf internationaler Ebene beschlossenen allgemeinen Klimaziele und der Emissionsgrenzwerte für die Schifffahrt im Speziellen sind innovative Antriebstechnologien notwendig.

Derzeit werden jedoch nahezu alle Schiffe mit Schweröl oder Diesel angetrieben, und auch die wenigen vorhandenen Alternativen basieren zumeist auf dem Vorhandensein eines großen Energiespeichers, dessen Produktion energieaufwendig, kostenintensiv und umweltbelastend ist. Der Bedarf an nachhaltigen Antriebstechnologien wird zusätzlich durch den Umstand verstärkt, dass sich der Markt der Schiffsindustrie in einem einigermaßen stetigen, vergleichsweise hohen Wachstum befindet und bereits heute 90 % des weltweiten Handels auf dem Seeweg abgewickelt werden. Ein weiteres Argument für den Bedarf an sauberen Antriebstechnologien ist, dass mit diesen auch einige Schwächen von Diesel- und Schwerölantrieben adressiert werden können. So machen die Treibstoffkosten bis zu 50 % der operativen Kosten eines Containerschiffs aus, und durch die Tendenz, Schiffe immer größer zu bauen, um diese wirtschaftlicher zu machen, sind längere Liegezeiten in Häfen und weniger Flexibilität in der Gestaltung von Lieferketten eine nachteilige Folge.

Segelschiffe, die als Transportschiffe eingesetzt werden, benötigen bei Frachten von bis zu 250 t eine 10- bis 20-köpfige Besatzung, was im Vergleich mit konventionellen Containerschiffen ein hoher Personalbedarf ist. Sie sind zwar zu 100 % nachhaltig, jedoch nicht industriell anwendbar, da sie für ihre Lieferungen zu viel Zeit benötigen, zu teuer sind und keine verlässlichen Angaben zum Ankunftszeitpunkt getroffen werden können.

Ferner sind zur Treibstoffeinsparung bei konventionellen Schiffen als Hilfsantriebe sogenannte AWE-Systeme (Engl.: Airborne Wind Energy, AWE) oder sogenannten Flettner-Rohre bekannt. Sie können verwendet werden, wenn das Schiff, auf welchem die Hilfsantriebe installiert sind, Kurs in Windrichtung hat. In diesem Fall sind Treibstoffeinsparungen von bis zu 15 % möglich.

GB 2 334 004 A offenbart ein Moment-stabilisiertes Segelboot. Das Segelboot weist einen Rumpf mit Ballast und einen weiteren Rumpf ohne Ballast auf.

DE 20 2016 004 090 U1 beschreibt ein Wasserfahrzeug umfassend ein Flugwindkraftwerk mit einem Fluggerät, mit einer Leine zum Verankern des Fluggeräts am Wasserfahrzeug sowie mit einer zweiten elektrischen Rotationsmaschine zum Wandeln von mittels des Fluggeräts einer Luftströmung entzogenen Strömungsleistung in elektrische Leistung.

US 2007/0157864 A1 offenbart ein Boot mit einer Plattform und Armen, die sich radial von der Plattform erstrecken. An den Armen sind Unterwasserruder angebracht. Weiterhin sind drei Schwimmer vorgesehen.

EP 1 313 642 B1 betrifft eine Steuervorrichtung für einen Lenkdrachen an einem Fahrzeug, welcher Lenkdrachen über wenigstens zwei oder drei, vorzugsweise über wenigstens vier oder fünf Flugleinen mittels einer Lenkeinrichtung lenkbar ist.

Vor diesem Hintergrund besteht eine Aufgabe der vorliegenden Erfindung darin, ein verbessertes Wasserfahrzeug zur Verfügung zu stellen.

Demgemäß wird ein Wasserfahrzeug gemäß Anspruch 1 bereitgestellt.

Dadurch, dass das Profilelement vorgesehen ist, welches der Krängung des Rumpfs entgegenwirkt, ist es möglich, den Rumpf um beispielsweise bis zu 90° in den Wind zu drehen bzw. gegen diesen aufzukreuzen. Dadurch sind - im Vergleich zum Stand der Technik - andere Kurse möglich, ohne dass die Krängung des Rumpfs zu groß wird oder dieser sogar Schlagseite bekommt. Gleichzeitig kann der Tragflügel effizienter betrieben werden.

Der Rumpf ist der einzige Rumpf des Wasserfahrzeugs. Bei dem einzigen Rumpf handelt es sich um einen einzigen zusammenhängenden Schwimmkörper; im Übrigen verfügt das Wasserfahrzeug über keine weiteren Schwimmkörper, wie etwa einen Ausleger. Der einzige Rumpf kann an seiner Unterseite profiliert sein. Insbesondere kann der Rumpf im Querschnitt (quer zur Fahrrichtung) zwei, drei oder mehr nebeneinander liegende Kiele, Kufen oder sonstige (insbesondere dreiecksförmige) Geometrien ausbilden.

Das Wasserfahrzeug kann ein Containerschiff sein. In diesem Fall kann die Nutzlast Container umfassen. Beispielsweise ist das Wasserfahrzeug geeignet, mehrere, bspw. 1 bis 16, insbesondere vier oder acht, Schiffscontainer oder ISO-Container aufzunehmen. Das Wasserfahrzeug kann jedoch auch im Personentransport, beispielsweise als Sportboot oder Fähre, Anwendung finden. In Ausführungsformen kann mit dem Tragflügel eine Antriebsleistung zwischen 20 kW und 5 MW, bevorzugt mindestens 1 MW erzielt werden.

Im Betrieb des Wasserfahrzeugs wird der Tragflügel von dem Wind angeströmt, wodurch der Tragflügel die Windkraft auf das Seil aufbringt. Beispielsweise kann der Tragflügel dazu eingerichtet sein, auf einer Höhe zwischen 50 und 450 Metern über dem Meeresspiegel betrieben zu werden.

Das Seil kann beispielsweise ein Stahlseil sein. Das Seil kann jedoch auch aus einem Kunststoffmaterial, insbesondere Kevlar, gefertigt sein. Ferner kann das Seil auch eine Datenleitung zur Kommunikation des Tragflügels mit dem Rumpf und/oder eine elektrische Leitung zum Übertragen von elektrischer Energie von dem Tragflügel auf den Rumpf oder umgekehrt aufweisen.

Es sind mehrere Profilelemente vorgesehen. Es können beispielsweise eins, zwei, drei, vier oder mehr Profilelemente vorgesehen sein. Die Anzahl der Profilelemente ist grundsätzlich beliebig. Die mehreren Profilelemente sind vorzugsweise jeweils dazu eingerichtet, eine Abtriebskraft zu erzeugen, die einer Krängung des Rumpfs durch die Windkraft entgegenwirkt.

Die ein oder mehreren Profilelemente sind an dem (insbesondere einzigen) Rumpf befestigt. D.h., sie sind nicht etwa beabstandet von diesem an einem separaten Schwimmkörper oder dergleichen befestigt. Die ein oder mehreren Profilelemente sind vorzugsweise von einer Längsmittellinie und/oder Quermittellinie des Rumpfs beabstandet angeordnet. Insbesondere weisen das oder die Profilelemente in einer Draufsicht auf das Wasserfahrzeug keinerlei Überdeckung mit der Längsmittelline und/oder Quermittellinie auf, d.h., sie sind gegenüber diesen Linien gänzlich versetzt angeordnet. Insbesondere können das oder die Profilelemente - in einer Draufsicht gesehen - in einem Randbereich des Rumpfs (äußerer Randbereich desselben) angeordnet sein. Der Abstand von der Längsmittellinie erlaubt es, ein der Krängung besonders wirksam entgegenwirkendes Moment um die Längsmittellinie zu erzeugen. Durch den Abstand von der Quermittellinie kann ein entsprechendes Moment um diese Linie erzeugt und dadurch eine weitere Stabilisierung der Fahrt erzielt werden.

Die Profilelemente sind sogenannte Hydrofoils oder können als solche bezeichnet werden. Im Betrieb (zumindest in einem Betriebsmodus) des Wasserfahrzeugs hebt sich der Rumpf aus dem Wasser heraus, so dass nur noch die Profilelemente in Kontakt mit dem Wasser sind und durch das Wasser gezogen werden.

Unter der "Krängung" ist vorliegend die Neigung des Wasserfahrzeugs beziehungsweise des Rumpfs des Wasserfahrzeugs zur Seite, also eine Drehung um eine Längsachse des Rumpfs, zu verstehen. Die Krängung ist eine kurzzeitige oder zumindest kontrollierte Rollbewegung, die den Rumpf in Schräglage bringt. Dadurch, dass das Profilelement die Abtriebskraft erzeugt, wird ein Moment erzeugt, welches der Krängung des Rumpfes entgegenwirkt.

Gemäß einer Ausführungsform weist das Wasserfahrzeug ferner eine Winde zur Veränderung der Länge des Seils auf.

Hierdurch ist es beispielsweise möglich, den Tragflügel mit Hilfe des Seils derart zu starten, dass der Tragflügel beim Aufsteigen das Seil von der Winde abrollt.

Gemäß einer weiteren Ausführungsform ist die Winde dazu eingerichtet, das Seil zu verlängern, wenn die Windkraft einen Schwellwert überschreitet.

Hierdurch kann beispielsweise dann, wenn die Windkraft so groß ist, dass selbst die Abtriebskraft des Profilelements nicht mehr groß genug ist, um der Krängung entgegenzuwirken, die Windkraft reduziert oder auf dem Schwellwert gehalten werden, so dass die Abtriebskraft (der Profilelemente) stets groß genug ist, um der Krängung des Rumpfs entgegenzuwirken.

Gemäß einer weiteren Ausführungsform ist die Winde dazu eingerichtet, den Tragflügel in die Luft zu starten oder zu landen.

Zum Starten des Tragflügels gibt die Winde beispielsweise das Seil frei. Zum Laden des Tragflügels hingegen rollt die Winde das Seil auf.

Gemäß einer weiteren Ausführungsform ist die Winde dazu eingerichtet, das Seil zu verkürzen, um bei schwachem Wind den Tragflügel in der Luft zu halten.

Beispielsweise kann die Winde das Seil stets so verkürzen oder verlängern, dass eine vordefinierte Windkraft auf das Seil wirkt. Bei unveränderten Windbedingungen kann beispielsweise eine Verkürzung des Seils zumindest kurzfristig eine Erhöhung der Windkraft bewirken.

Gemäß einer weiteren Ausführungsform ist die Winde zur Stromerzeugung eingerichtet.

Hierzu kann die Winde einen Generator aufweisen. Insbesondere ist die Winde dann zur Stromerzeugung eingerichtet, wenn das Seil von der Winde abgewickelt wird. Mit Hilfe des erzeugten Stroms können beispielsweise Komponenten des Wasserfahrzeugs, insbesondere ein elektrischer Hilfsantrieb mit (Schiffs-)Schraube, oder des Tragflügels mit elektrischer Energie versorgt werden. Vorzugsweise wird die Energie hierfür, beispielsweise in einer Batterie, zwischengespeichert.

Gemäß einer weiteren Ausführungsform ist der Tragflügel dazu eingerichtet, entlang eines vordefinierten Krafterzeugungszyklus zu fliegen.

Hierzu kann der Tragflügel eine Steuerungselektronik aufweisen, welche beispielsweise dazu eingerichtet ist, ein Ruder (bspw. ein Höhenruder und ein Seitenleitwerk) des Tragflügels anzusteuern, so dass dieser den vordefinierten Krafterzeugungszyklus fliegt. Der Krafterzeugungszyklus kann beispielsweise sinusförmig, schleifenförmig oder 8-förmig sein. Nach Beendigung des vordefinierten Krafterzeugungszyklus wird der Tragflügel zurück zu einem Startpunkt gesteuert (wobei die Winde das Seil aufwickelt), woraufhin der Tragflügel erneut den Krafterzeugungszyklus durchfliegt (wobei das Seil von der Winde abgerollt wird und bspw. der Generator zur Stromerzeugung angetrieben wird).

Gemäß einer weiteren Ausführungsform ist der Tragflügel steif oder flexibel.

Der Tragflügel kann beispielsweise ein sogenannter Tube-Bow-Kite, ein Tube-C-Kite, eine Kite-Matte, ein Plane-Kite, ein steifer Flügel oder ein ausgesteifter C-Kite sein. Vorzugsweise ist der Tragflügel steif und umfasst eine Tragfläche sowie ein Höhenruder, ein Seitenleitwerk und/oder Querruder.

Gemäß einer weiteren Ausführungsform ist ein Anstellwinkel des Profilelements oder eines Profilabschnitts desselben einstellbar.

Vorzugsweise ist das Profilelement ein sogenannter U-, L- oder T-Foil. Das Profilelement umfasst einen ersten Profilabschnitt und einen senkrecht zu dem ersten Profilabschnitt angeordneten zweiten Profilabschnitt. Das gesamte Profilelement ist um eine Achse drehbar mit dem Rumpf verbunden. Durch ein Verdrehen des gesamten Profilelements gegenüber dem Rumpf kann der Anstellwinkel des ersten Profilabschnitts verstellt werden. Der zweite Profilabschnitt ist gegenüber dem ersten Profilabschnitt um eine weitere Achse verschwenkbar gelagert. Dabei sind die Achse des ersten Profilabschnitts und die Achse des zweiten Profilabschnitts senkrecht zueinander angeordnet. Mit Hilfe einer Verstellung des Anstellwinkels des zweiten Profilabschnitts kann beispielsweise entweder eine Auftriebskraft oder die zuvor erwähnte Abtriebskraft des Profilelements erzeugt und verändert werden. Der erste (im Wasser im Wesentlichen senkrecht gerichtete) Profilabschnitt wirkt damit als Seitenruder, der zweite (im Wasser im Wesentlichen waagrecht gerichtete) Profilabschnitt als Höhenruder.

Gemäß einer weiteren Ausführungsform weist das Wasserfahrzeug ferner einen Aktor auf, welcher mit dem Profilelement oder dem Profilabschnitt desselben zur Einstellung desselben gekoppelt ist, und eine Steuereinrichtung, welche den Aktor ansteuert.

Vorzugsweise sind ein erster Aktor und ein zweiter Aktor vorgesehen. Der erste Aktor ist dem ersten Profilabschnitt zugeordnet. Der zweite Aktor ist dem zweiten Profilabschnitt zugeordnet. Dabei kann der zweite Aktor mit Hilfe einer Schubstange mit dem zweiten Profilabschnitt verbunden sein. Die Aktoren können elektrisch, pneumatisch oder hydraulisch oder der gleichen ausgeführt sein. Die Steuereinrichtung kann ein Bordcomputer des Wasserfahrzeugs sein oder als solcher bezeichnet werden.

Gemäß einer weiteren Ausführungsform weist das Wasserfahrzeug ferner eine Sensorik zur Erfassung der Windkraft auf, wobei die Steuereinrichtung dazu eingerichtet ist, den Aktor in Abhängigkeit der erfassten Windkraft anzusteuern.

Beispielsweise ist die Steuereinrichtung dazu eingerichtet, den Aktor bei einer ansteigenden Windkraft derart anzusteuern, dass die von dem Profilelement erzeugte Abtriebskraft größer wird, so dass stets der Krängung des Rumpfs entgegengewirkt wird.

Gemäß einer weiteren Ausführungsform sind mehrere Profilelemente vorgesehen, welche gemeinsam und jeweils ansteuerbar sind, um ein auf den Rumpf wirkendes Moment auszugleichen.

"Gemeinsam und jeweils ansteuerbar" meint hier, dass die mehreren Profilelemente derart gesteuert werden, dass sie zusammenwirken, um das der Krängung entgegenwirkende Moment zu erzeugen.

Gemäß einer weiteren Ausführungsform ist der Tragflügel der Hauptantrieb des Wasserfahrzeugs und/oder die Nutzlast beträgt größer 10 t, bevorzugt größer 100 t, weiter bevorzugt größer 1.000 t.

Zusätzlich kann das Wasserfahrzeug einen Hilfsantrieb, beispielsweise in Form einer elektrisch angetriebenen Schiffsschraube, umfassen. Der Hilfsantrieb kann einklappbar sein. Mit Hilfe des Hilfsantriebs kann das Wasserfahrzeug beispielsweise in einem Hafen manövriert werden. Ferner kann der Hilfsantrieb, beispielsweise bei einer geringen Windstärke (insbesondere in unteren Luftschichten), dazu benutzt werden, den Tragflügel zu starten.

Gemäß einer weiteren Ausführungsform weist der Rumpf eine Verstelleinrichtung und einen Angriffspunkt auf, an welchem das Seil befestigt ist, wobei die Verstelleinrichtung dazu eingerichtet ist, den Angriffspunkt zu verstellen, um einen Hebel eines auf den Rumpf wirkenden krängenden Moments zu reduzieren oder zu minimieren.

Die Verstelleinrichtung kann zwei bogenförmig, insbesondere halbkreisförmig, gebogene Schienenelemente aufweisen, welche auf einem Deck des Rumpfs montiert sind. Der Angriffspunkt kann beispielsweise eine verschiebbar an den Schienenelementen gelagerte Rolle sein, über welche das Seil von der Winde kommend umgelenkt wird. Alternativ kann auch die Winde selbst verschiebbar an der Verstelleinrichtung gelagert sein. Mit Hilfe der Verstelleinrichtung ist es somit möglich, den Angriffspunkt stets derart zu führen, dass die von dem Seil auf den Rumpf übertragene Windkraft einen möglichst kleinen Hebel (bzgl. des Rumpfs) aufweist. Das heißt, das krängende Moment wird stets minimiert.

Gemäß einer weiteren Ausführungsform ist das Profilelement dazu eingerichtet, eine Auftriebskraft im Wasser zu erzeugen.

Je nachdem, wie beispielsweise der zweite Profilabschnitt (insbesondere des T-Foils) angestellt wird, erzeugt dieser entweder die Abtriebskraft oder die Auftriebskraft. Beispielsweise kann es zum Starten des Tragflügels vorteilhaft sein, wenn die Profilelemente eine Auftriebskraft und keine Abtriebskraft erzeugen, weil dann der Rumpf schneller wird bzw. auf dem Wasser gleitet.

Gemäß einer weiteren Ausführungsform weist der Rumpf eine tropfenförmige Geometrie auf.

Dadurch kann ein hinsichtlich seines Luftwiderstands optimierter Rumpf geschaffen werden. Dies ist deshalb so wichtig, weil der Rumpf, soweit es die Windbedingungen zulassen, über große Strecken aus dem Wasser gehoben ist bzw. auf dem Wasser mittels der mehreren Profilelemente gleitet. Eine Optimierung für den Wasserwiderstand wie bei herkömmlichen Schiffen ist daher nicht vonnöten. Insbesondere umfasst der Rumpf eine tropfenförmige Abdeckung, welche beispielsweise auch die von dem Rumpf getragene Nutzlast abdeckt.

Weiterhin wird ein Verfahren zum Steuern eines Wasserfahrzeugs gemäß Anspruch 8 vorgeschlagen.

Das Steuern der Krängung des Wasserfahrzeugs findet insbesondere dadurch statt, dass der zweite Profilabschnitt des T-Foils (oder eines sonstigen Profilelements, insbesondere auch L- oder sonstigen Foils; es muss sich auch nicht um einen zweiten Profilabschnitt handeln - es kann sich ganz allgemein um jedes Profilelement oder einen Abschnitt davon handeln) derart angestellt wird, dass dieser die Abtriebskraft erzeugt. Die Abtriebskraft kann dabei in Abhängigkeit von der Windkraft veränderlich sein. Entsprechend kann auch mithilfe eines oder mehrerer anderer (oder je nach Situation auch mittels desselben) zweiter Profilabschnitte eine Auftriebskraft erzeugt werden. Diese können dann gemeinsam den Rumpf derart stabilisieren, dass die Krängung stets unterhalb eines definierten Schwellwerts bleibt.

Gemäß einer Ausführungsform wird die Abtriebskraft in Abhängigkeit zumindest eines Parameters gesteuert, wobei der Parameter bevorzugt ausgewählt ist aus der Gruppe umfassend: die Windkraft, eine Stellung des Tragflügels in der Luft, eine Windgeschwindigkeit, Positionskoordinaten des Wasserfahrzeugs, Orientierung des Wasserfahrzeugs im Raum, eine Fahrgeschwindigkeit des Wasserfahrzeugs und/oder ein Gewicht des Wasserfahrzeugs.

Hierzu kann das Wasserfahrzeug eine entsprechende Sensorik aufweisen, welche beispielsweise mit Hilfe der Steuereinrichtung ausgewertet wird, um das Profilelement wie gewünscht anzustellen.

Die für das vorgeschlagene Wasserfahrzeug beschriebenen Ausführungsformen und Merkmale gelten für das vorgeschlagene Verfahren entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und nach unten möglich, soweit nichts Gegenteiliges angegeben ist.

Weitere mögliche Implementierungen des Wasserfahrzeugs und/oder des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Wasserfahrzeugs und/oder des Verfahrens hinzufügen.

Weitere vorteilhafte Ausgestaltungen und Aspekte des Wasserfahrzeugs und/oder des Verfahrens sind Gegenstand der Unteransprüche sowie der im Folgenden beschriebenen Ausführungsbeispiele des Wasserfahrzeugs und/oder des Verfahrens. Im Weiteren werden das Wasserfahrzeug und/oder das Verfahren anhand von bevorzugten Ausführungsformen unter Bezugnahme auf die beigelegten Figuren näher erläutert.
Fig. 1 zeigt eine schematische perspektivische Ansicht einer Ausführungsform eines Wasserfahrzeugs;
Fig. 2 zeigt eine schematische Aufsicht (Draufsicht) des Wasserfahrzeugs gemäß Fig. 1, wobei dieses eine geringfügig geänderte Geometrie aufweist;
Fig. 3 zeigt eine schematische Vorderansicht des Wasserfahrzeugs gemäß Fig. 1;
Fig. 4 zeigt eine schematische Schnittansicht des Wasserfahrzeugs gemäß Fig. 1;
Fig. 5 zeigt eine weitere schematische perspektivische Ansicht des Wasserfahrzeugs gemäß Fig. 1;
Fig. 6 zeigt eine schematische Seitenansicht des Wasserfahrzeugs gemäß Fig. 1;
Fig. 7 zeigt eine weitere schematische perspektivische Ansicht des Wasserfahrzeugs gemäß Fig. 1;
Fig. 8 zeigt eine weitere schematische Seitenansicht des Wasserfahrzeugs gemäß fig. 1;
Fig. 9 zeigt eine weitere schematische perspektivische Ansicht des Wasserfahrzeugs gemäß Fig. 1;
Fig. 10 zeigt eine weitere schematische perspektivische Ansicht des Wasserfahrzeugs gemäß Fig. 1;
Fig. 11 zeigt eine schematische Seitenansicht des Wasserfahrzeugs gemäß Fig. 1;
Fig. 12 zeigt eine weitere schematische perspektivische Ansicht des Wasserfahrzeugs gemäß Fig. 1;
Fig. 13 zeigt eine weitere schematische Seitenansicht des Wasserfahrzeugs gemäß Fig. 1;
Fig. 14 zeigt eine schematische perspektivische Ansicht einer Ausführungsform eines Profilelements für das Wasserfahrzeug gemäß Fig. 1;
Fig. 15 zeigt mehrere schematische Seitenansichten des Profilelements gemäß Fig. 14;
Fig. 16 zeigt eine weitere schematische perspektivische Ansicht des Wasserfahrzeugs gemäß Fig. 1; und
Fig. 17 zeigt ein schematisches Blockdiagramm einer Ausführungsform eines Verfahrens zum Steuern des Wasserfahrzeugs gemäß Fig. 1.

In den Figuren sind gleiche oder funktionsgleiche Elemente mit denselben Bezugszeichen versehen worden, sofern nichts anderes angegeben ist.

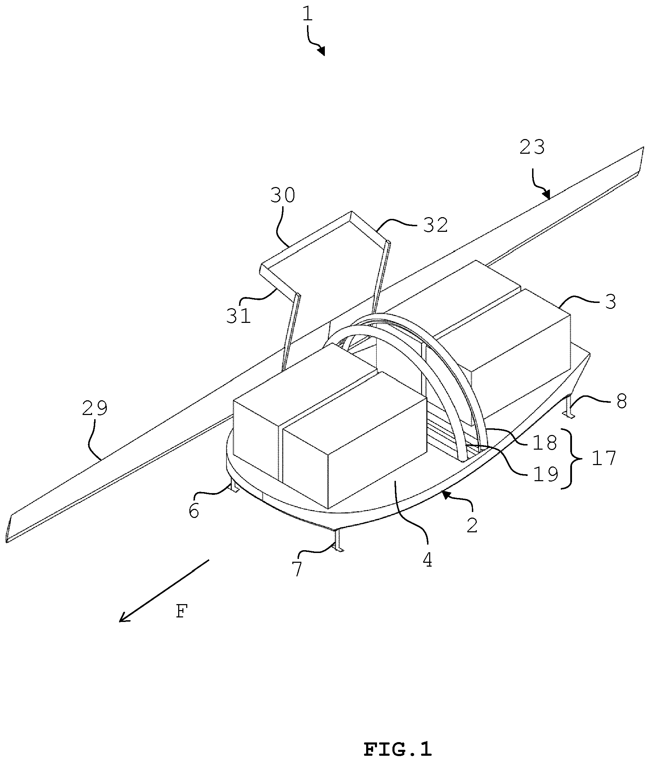

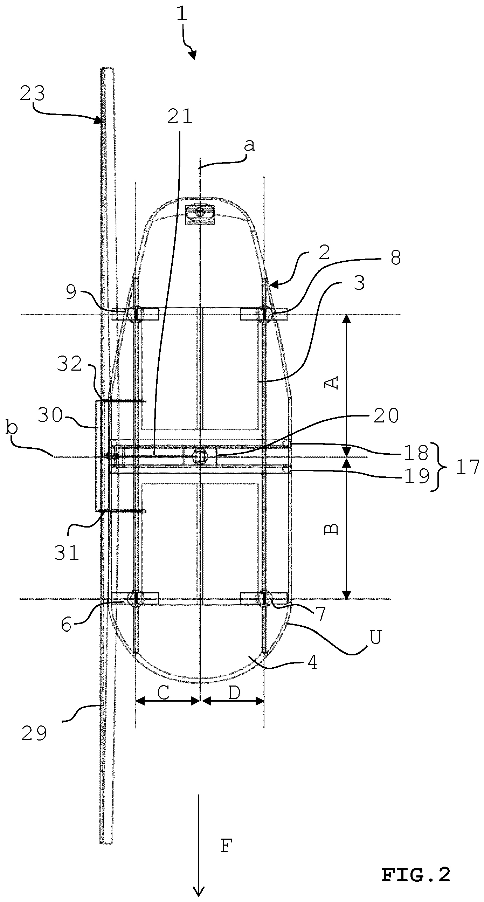

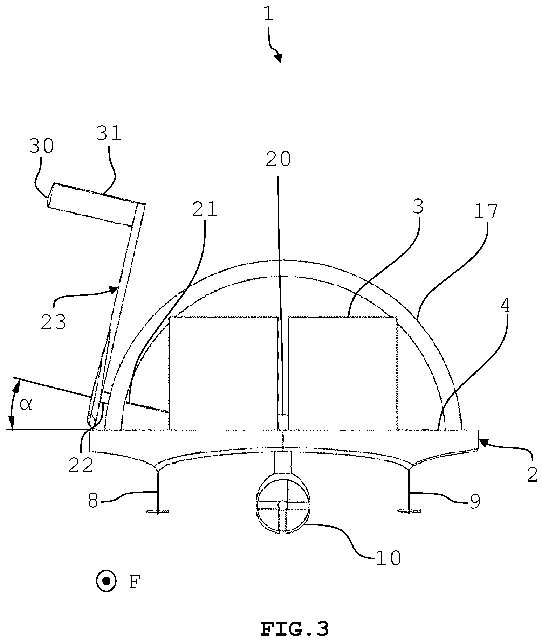

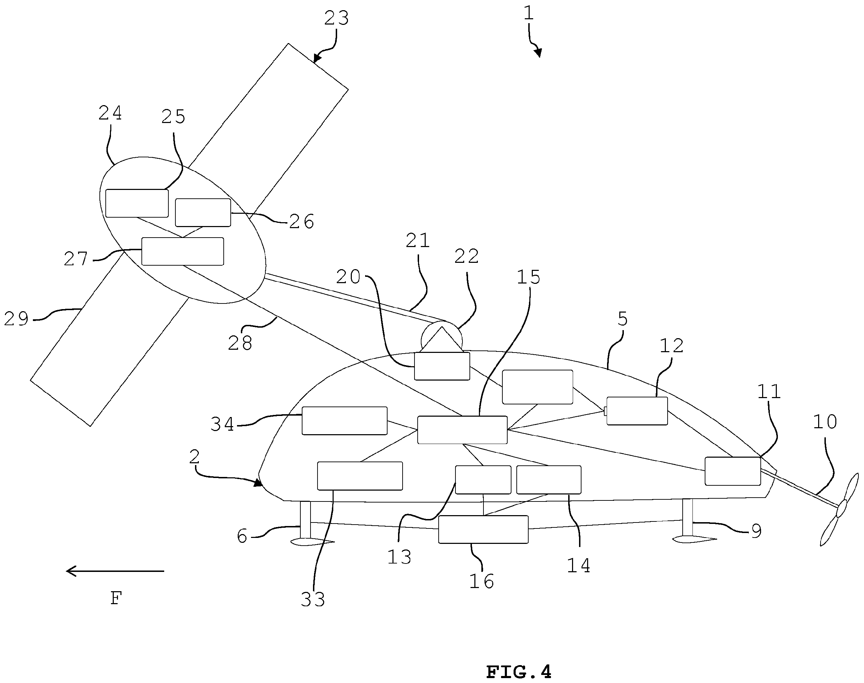

Die Fig. 1 zeigt eine schematische perspektivische Ansicht einer Ausführungsform eines Wasserfahrzeugs 1. Die Fig. 2 zeigt eine schematische Aufsicht (Draufsicht) des Wasserfahrzeugs 1, wobei dieses im Vergleich zu Fig. 1 eine geringfügig geänderte Geometrie aufweist. Die Ausführungen in Bezug auf Fig. 2 haben gleichwohl Gültigkeit für alle anderen Figuren. Die Fig. 3 zeigt eine schematische Vorderansicht des Wasserfahrzeugs 1. Die Fig. 4 zeigt eine schematische Schnittansicht des Wasserfahrzeugs. Nachfolgend wird auf die Fig. 1 bis 4 gleichzeitig Bezug genommen.

Das Wasserfahrzeug 1 umfasst einen Rumpf 2. Gemäß dem Ausführungsbeispiel verfügt das Wasserfahrzeug 1 über einen einzigen Rumpf 2 und keine weiteren Schwimmköper, Ausleger etc.

Der Rumpf 2 ist dazu eingerichtet, Personen und/oder eine Nutzlast 3 zu tragen oder aufzunehmen. Die Nutzlast 3 kann, wie in den Fig. 1 bis 3 gezeigt, (insbesondere ISO-)Container, das heißt genormte Großraumbehälter, umfassen. Der Rumpf 2 kann hierzu ein Deck 3 aufweisen, auf dem die Nutzlast 3 platziert ist. Der Rumpf 2 kann eine tropfenförmige oder eiförmige Abdeckung 5 aufweisen, welche die Nutzlast 3 einschließt. Die Abdeckung 5 bzw. der Rumpf 2 sind derart aerodynamisch gestaltet, dass das Wasserfahrzeug 1 im Betrieb, das heißt wenn es sich entlang der Fahrtrichtung F fortbewegt, einen möglichst geringen Luftwiderstand aufweist.

Unterseitig an dem Rumpf 2 sind Profilelemente 6 bis 9 vorgesehen. Die Anzahl der Profilelemente 6 bis 9 ist grundsätzlich beliebig. Beispielsweise sind vier derartige Profilelemente 6 bis 9 vorgesehen. Die Profilelemente 6 bis 9 sind sogenannte Hydrofoils oder können als solche bezeichnet werden. Die Profilelemente 6 bis 9 sind (unmittelbar) an dem Rumpf befestigt, d.h., nicht etwa an einem weiteren Schwimmkörper.

Bei einer Fahrt des Wasserfahrzeugs 1 entlang einer Fahrtrichtung F sind die Profilelemente 6 bis 9 jeweils dazu eingerichtet, durch das Wasser gezogen zu werden und dabei wahlweise (abhängig von der Ansteuerung eines jeweiligen Profilelements 6 bis 9) eine Auftriebskraft für eine Gleitfahrt des Rumpfs und eine Abtriebskraft, die einer Krängung des Rumpfs entgegenwirkt, zu erzeugen. Hierzu sind die Profilelemente 6 bis 9, wie in der Draufsicht aus Fig. 2 zu erkennen, bevorzugt jeweils mit einem Abstand C, D zu einer Längsmittellinie a des Rumpfs 2 angeordnet. Die Längsmittellinie a verläuft in bzw. entgegen der Fahrtrichtung des Wasserfahrzeugs 1 und teilt diese bzw. dessen Rumpf 2 in zwei (im Wesentlichen) gleich große Hälften. Die Abstände C, D sind bevorzugt gleich groß. Die Profilelemente 6 und 7 bzw. 8 und 9 liegen sich bevorzugt in Bezug auf die Längsmittellinie a direkt gegenüber. Die Profilelemente 6 bis 9 sind in der Draufsicht aus Fig. 2 gesehen gegenüber der Längsmittellinie a insbesondere derart versetzt angeordnet, dass sie keinen Überlapp mit dieser aufweisen (bzw. in der Draufsicht gesehen keinen Schnittpunkt mit der Längsmittellinie a haben). Eine Quermittellinie b des Rumpfs 2 verläuft senkrecht zur Längsmittellinie a und teilt die Länge des Rumpfs 2 (im Wesentlichen) in die Hälfte. Die Profilelemente 6 bis 9 weisen bevorzugt in Bezug auf die Quermittellinie b die (insbesondere gleich großen) Abstände A, B auf. Die Profilelemente 6 und 9 bzw. 7 und 8 liegen sich bevorzugt in Bezug auf die Quermittellinie b direkt gegenüber. Die Profilelemente 6 bis 9 sind in der Draufsicht aus Fig. 2 gesehen gegenüber der Quermittellinie b insbesondere derart versetzt angeordnet, dass sie keinen Überlapp mit dieser aufweisen. Insbesondere sind die Profilelemente 6 bis 9 sämtlich im Bereich eines äußeren Umfangs U des Rumpf 2 (in der Draufsicht aus Fig. 2 gesehen) angeordnet.

Ein mittels der Profilelemente 6 bis 9 um die Längsmittelachse a erzeugtes Moment wirkt der Krängung entgegen. Ein mittels der Profilelemente 6 bis 9 um die Quermittelachse b erzeugtes Moment kann der Stabilisierung der Fahrt dienen. Weiteres zu den Profilelementen 6 bis 9 wird nachstehend erläutert.

Ferner ist unterseitig an dem Rumpf 2 ein Hilfsantrieb 10 vorgesehen. Der Hilfsantrieb 10 ist insbesondere ein elektrischer Hilfsantrieb. Der Hilfsantrieb 10 kann beispielsweise dazu verwendet werden, das Wasserfahrzeug 1 innerhalb eines Hafens oder dergleichen zu manövrieren. Der Hilfsantrieb 10 kann eine Schiffsschraube umfassen, welche mit Hilfe eines Motors 11 angetrieben ist. Der Motor 11 wird mit Hilfe einer Batterie 12 mit elektrischer Energie versorgt.

Den Profilelementen 6 bis 9 ist - ggf. jeweils - eine Aktorik 13 sowie eine Sensorik (umfassend mehrere Sensoren) 14 zugeordnet, welche mit einem Bordcomputer 15 wirkverbunden sind. Die Aktorik 13 und die Sensorik 14 können mit Hilfe einer Wirkverbindung 16 mit den Profilelementen 6 bis 9 wirkverbunden sein. Der Bordcomputer 15 ist ferner mit dem Motor 11 und/oder der Batterie 12 gekoppelt, um den Hilfsantrieb 10 anzusteuern.

Oberseitig an dem Rumpf 2, das heißt an oder auf dem Deck 4, ist eine Verstelleinrichtung 17 vorgesehen. Die Verstelleinrichtung 17 umfasst zwei bogenförmige, insbesondere halbkreisbogenförmig gekrümmte Schienenelemente 18, 19, welche entlang der Fahrtrichtung F betrachtet voneinander beabstandet angeordnet sind. Der Verstelleinrichtung 17 ist eine Winde 20 zugeordnet. Die Winde 20 ist geeignet, ein Seil 21 aufzurollen und abzurollen. Mit Hilfe der Verstelleinrichtung 17 ist es möglich, einen Angriffspunkt 22 des Seils 21 an dem Wasserfahrzeug 1 beziehungsweise an der Verstelleinrichtung 17 zu verstellen. Der Angriffspunkt 22 kann beispielsweise eine Umlenkrolle sein. Beispielsweise kann mit Hilfe der Verstelleinrichtung 17 ein Winkel α zwischen dem Angriffspunkt 22 und dem Deck 4 verstellt werden. Je kleiner der Winkel α desto geringer sind die in den Rumpf 4 mittels des Seils 21 eingeleiteten Momente. Mit Hilfe der Verstelleinrichtung 17 kann entweder nur der Angriffspunkt 22 verlagert werden, oder die gesamte Winde 20. Im letztgenannten Fall ist die Winde 20 direkt verschiebbar an den Schienenelementen 18, 19 montiert.

Mit Hilfe des Seils 21 ist ein Tragflügel 23 des Wasserfahrzeugs 1 mit dem Rumpf 2 verbunden. Der Tragflügel 23 kann, wie in den Fig. 1 bis 4 gezeigt, ein steifer Tragflügel sein. Alternativ kann der Tragflügel 23 auch ein flexibler Tragflügel, insbesondere ein sogenannter Tube-Kite oder Matten-Kite sein. Der Tragflügel 23 kann eine Windkraftanlage in Form eines Rotors und eines Generators aufweisen, mit deren Hilfe der Tragflügel 23 mit elektrischer Energie versorgt wird.

Der Tragflügel 23 umfasst einen Rumpf 24, welcher beispielsweise eine Sensorik 25, eine Aktorik 26 und eine Steuerungselektronik 27 aufnehmen kann. Die Steuerungselektronik 27 ist mit Hilfe einer Datenleitung 28 mit dem Bordcomputer 15 des Wasserfahrzeugs 1 verbunden. Die Datenleitung 28 kann Teil des Seils 21 sein. Über die Datenleitung 28 kann der Tragflügel 23 auch mit Energie versorgt werden beziehungsweise für den Fall, dass der Tragflügel eine Windturbine aufweist, kann dieser das Wasserfahrzeug 1 mit elektrischer Energie versorgen. Die Datenleitung 28 kann selbstverständlich auch als eine drahtlose Kommunikation zwischen der Steuerungselektronik 27 des Tragflügels 23 und dem Bordcomputer 15 des Wasserfahrzeugs 1 vorgesehen sein. Neben dem Rumpf 24 umfasst der Tragflügel 23 - wie in Fig. 1 zu sehen - eine Tragfläche 29, ein Höhenruder 30 sowie zwei Seitenleitwerke 31, 32. Das Höhenruder 30 und die Seitenleitwerke 31, 32 können mit Hilfe der Aktorik 26 angesteuert werden, um den Tragflügel 23 zu manövrieren. Mit Hilfe der Sensorik 25 kann beispielsweise ein Anstellwinkel des Höhenruders 30 und ein entsprechender Anstellwinkel der Seitenleitwerke 31, 32 beziehungsweise von Seitenrudern der Seitenleitwerke 31, 32 erfasst werden.

Nun zurückkehrend zu der Figur 4 umfasst das Wasserfahrzeug 1 ferner eine Umweltsensorik 33, welche beispielsweise geeignet ist, Umwelteinflüsse, wie beispielsweise die Windgeschwindigkeit, die Windrichtung, die Temperatur, den Seegang oder dergleichen, zu erfassen. Die Umweltsensorik 33 ist mit dem Bordcomputer 15 signaltechnisch verbunden. Die Umweltsensorik 33 ist vorzugsweise innerhalb des Tragflügels 23 und/oder des Rumpfs 2 aufgenommen. Ferner umfasst das Wasserfahrzeug 1 ein Kommunikationssystem 34, welches vorzugsweise im Tragflügel 24 aufgenommen ist. Auch das Kommunikationssystem 34 ist mit dem Bordcomputer 15 signaltechnisch verbunden. Mit Hilfe des Kommunikationssystems 34 kann das Wasserfahrzeug 1 beispielsweise mit einem landbasierten Stützpunkt kommunizieren.

Die Fig. 1 bis 3 zeigen den Tragflügel 23 in einem seitlich an den Rumpf 2 geklappten Zustand, wobei der Tragflügel 23 an dem Rumpf 2 fixiert ist, insbesondere mithilfe der Verstelleinrichtung 17. In dieser in den Figuren 1 bis 3 gezeigten ersten Phase sorgt lediglich der Hilfsantrieb 10 für die Fortbewegung des Wasserfahrzeugs 1. Beispielsweise kann das Wasserfahrzeug 1 während der ersten Phase in einem Hafen oder dergleichen manövriert werden.

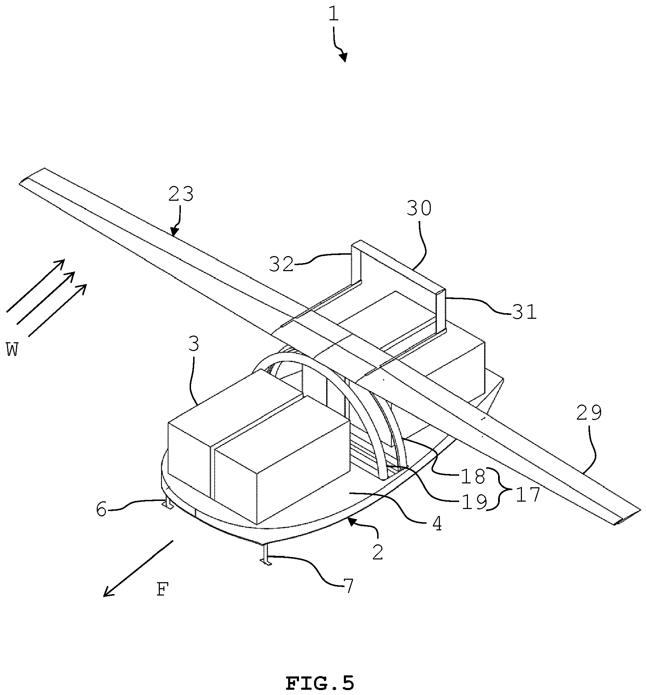

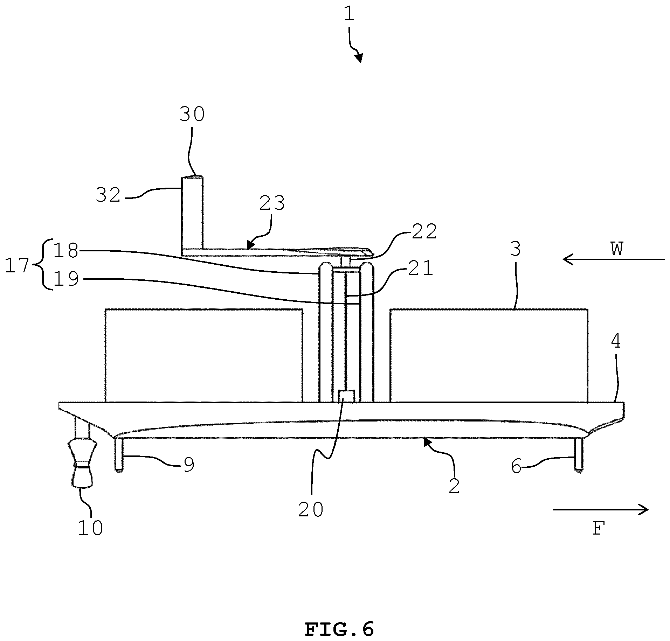

Die Fig. 5 zeigt eine weitere schematische perspektivische Ansicht des Wasserfahrzeugs 1. Die Figur 6 zeigt eine schematische Seitenansicht des Wasserfahrzeugs 1. Nachfolgend wird auf die Fig. 5 und 6 gleichzeitig Bezug genommen.

Die Fig. 5 und 6 zeigen das Wasserfahrzeug 1 in einer zweiten Phase, insbesondere in einer Startphase des Tragflügels 23. Mit Hilfe der Verstelleinrichtung 17 wird der Tragflügel 23 aus seinem angeklappten Zustand (Fig. 1 - 3) in einen weiteren Zustand verbracht, in dem er parallel zu dem Deck 4 ausgerichtet ist. Eine Vorderseite des Tragflügels 23 rotiert dabei auf der Verstelleinrichtung 17, bis diese orthogonal zu einer Windrichtung W steht. Für den Fall, dass der Wind nahe der Wasseroberfläche nicht ausreicht, um das Wasserfahrzeug 1 entlang der Fahrtrichtung F zu starten, sorgt der Hilfsantrieb 10 für den nötigen Vorschub entgegen der Windrichtung W, um so für eine ausreichende Anströmung des Tragflügels 23 zu sorgen.

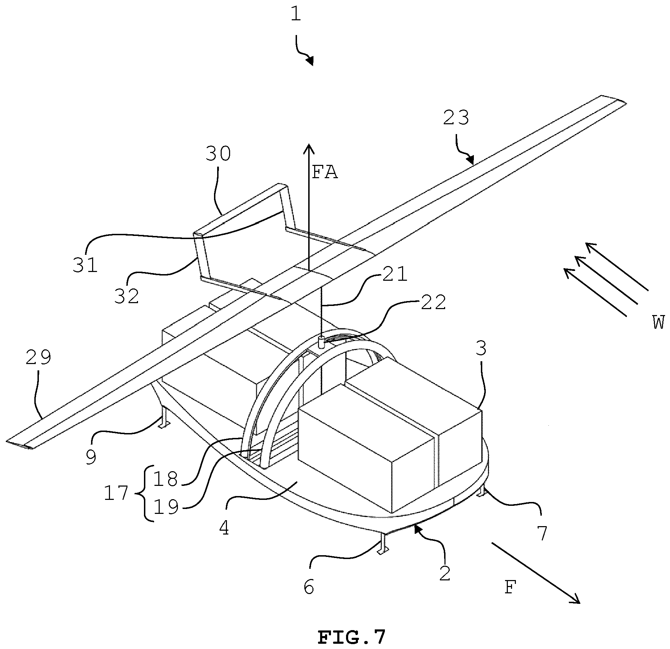

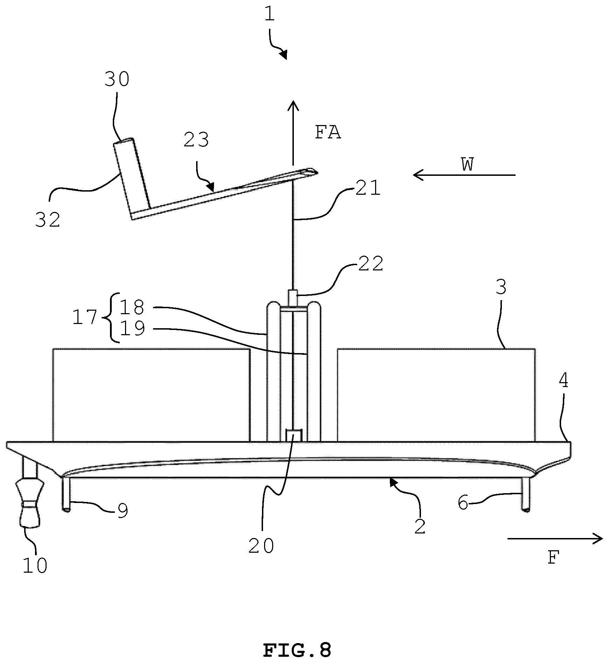

Die Fig. 7 zeigt eine weitere schematische perspektivische Ansicht des Wasserfahrzeugs 1. Die Fig. 8 zeigt eine weitere schematische Seitenansicht des Wasserfahrzeugs 1. Nachfolgend wird auf die Fig. 7 und 8 gleichzeitig Bezug genommen. Die Fig. 7 und 8 zeigen das Wasserfahrzeug 1 in einer dritten Phase, nämlich dem Abheben des Tragflügels 23. Dabei wird der Tragflügel 23 angeströmt und ein Anstellwinkel über das Höhenruder 30 verändert. Die resultierenden aerodynamischen Kräfte ziehen an dem Seil 21, welches kontrolliert über die Winde 20 ausrollt. Dabei kann die Winde 20 mit einem Generator verbunden sein, welcher bei dem Abrollen des Seils 21 von der Winde 20 elektrische Energie erzeugt, die beispielsweise zur Versorgung des Wasserfahrzeugs 1 oder zum Laden der Batterie 12 dienen kann. Bei dem Abheben des Tragflügels 23 aufgrund der Anströmung mit dem Wind wird eine Auftriebskraft FA erzeugt, welche dafür sorgt, dass das Seil 21 von der Winde 20 abgerollt wird.

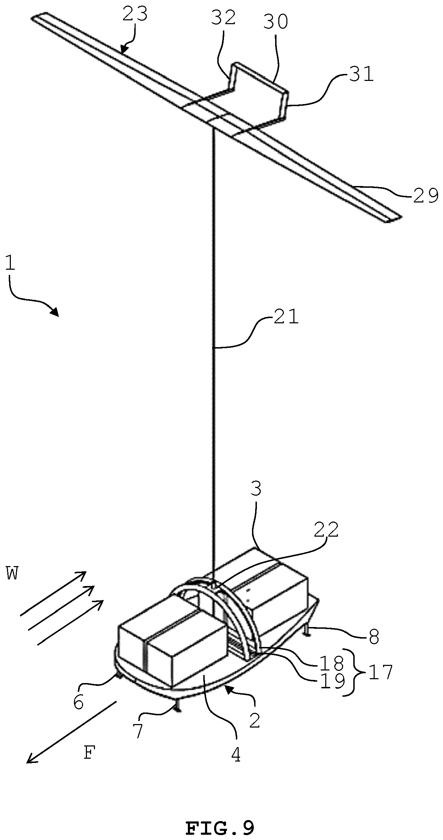

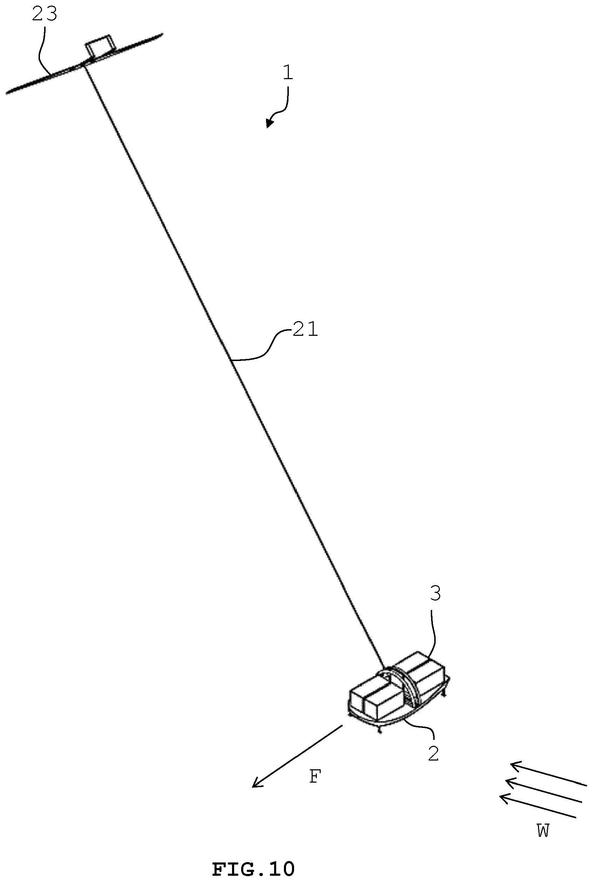

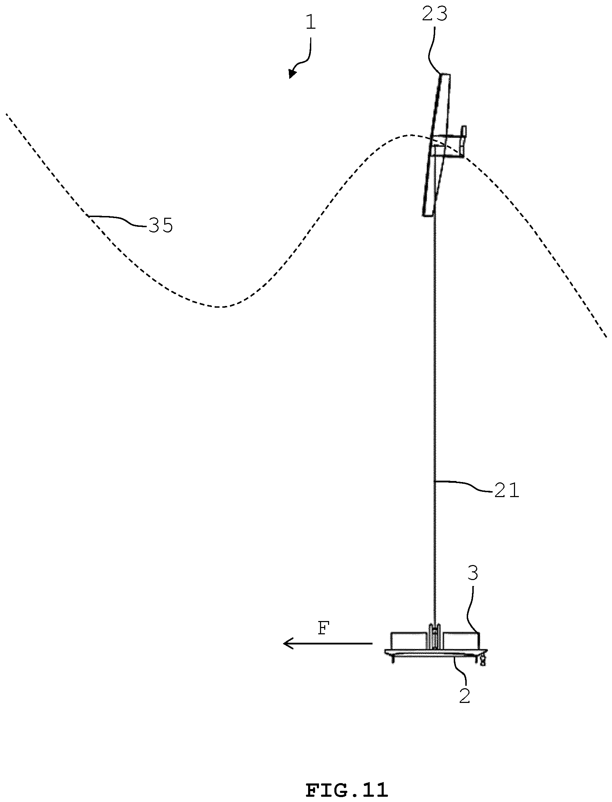

Die Fig. 9 zeigt eine weitere schematische perspektivische Ansicht des Wasserfahrzeugs 1. Die Fig. 10 zeigt eine weitere schematische perspektivische Ansicht des Wasserfahrzeugs 1. Die Fig. 11 zeigt eine schematische Seitenansicht des Wasserfahrzeugs 1. Nachfolgend wird auf die Fig. 9 bis 11 gleichzeitig Bezug genommen.

Die Fig. 9 bis 11 zeigen das Wasserfahrzeug in einer vierten Phase, in welcher der Tragflügel 23 aufsteigt und beispielsweise Flugzyklen 35 beginnt. Die Flugzyklen 35 können beispielsweise schleifenförmig oder 8-förmig (in Ausführungsformen zumindest teilweise auch geradlinig) ausgebildet sein. Wie die Fig. 9 und 10 zeigen, dreht der Rumpf 22 beispielsweise um 90° in die Windrichtung W, wenn der Tragflügel 23 seine Mindesthöhe im Vertikalflug erreicht hat. Wie die Fig. 10 zeigt, ist die Fahrtrichtung F nun orthogonal zu der Windrichtung W angeordnet. Der Tragflügel 23 kann nun mit den Flugzyklen 35 beginnen.

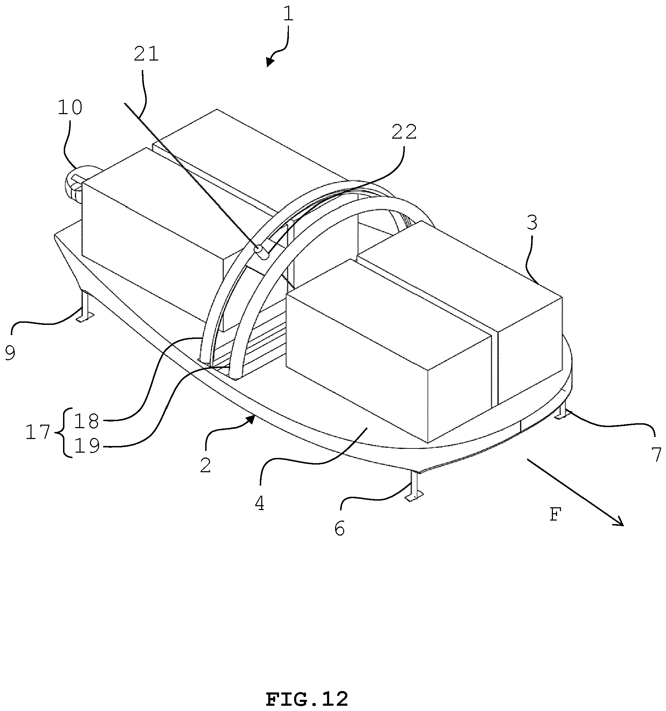

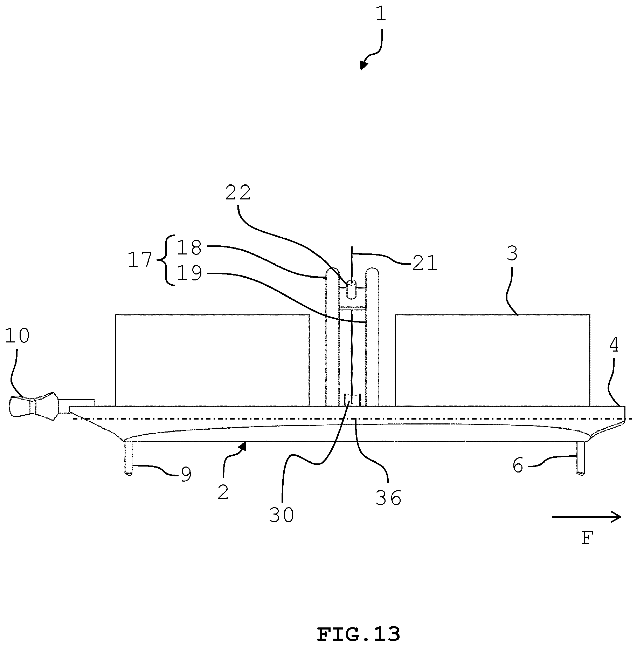

Die Fig. 12 zeigt eine weitere schematische perspektivische Ansicht des Wasserfahrzeugs 1. Die Fig. 13 zeigt eine weitere schematische Seitenansicht des Wasserfahrzeugs 1. Nachfolgend wird auf die Fig. 12 und 13 gleichzeitig Bezug genommen.

Die Fig. 12 und 13 zeigen das Wasserfahrzeug 1 in einer fünften Phase, welche das Einholen des Hilfsantriebs 10 umfasst. Das heißt, das Wasserfahrzeug 1 bewegt sich nun allein mit Hilfe des Hauptantriebs in Form des Tragflügels 23 entlang der Fahrtrichtung F fort.

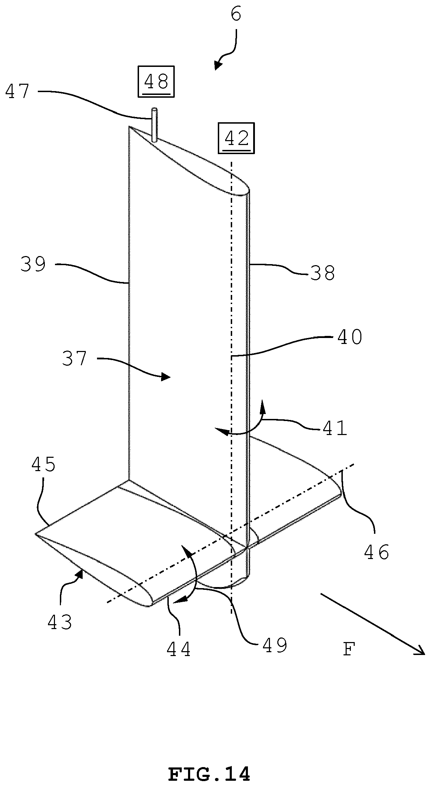

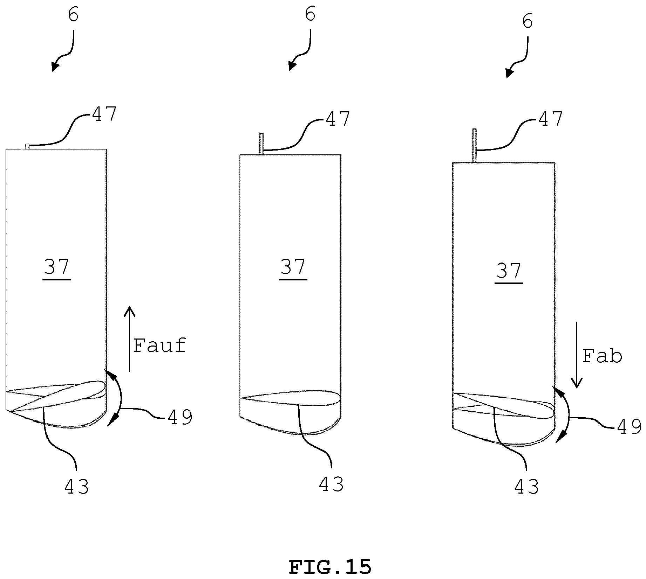

Die Fig. 14 zeigt eine schematische perspektivische Ansicht einer Ausführungsform eines wie zuvor erwähnten Profilelements 6. Vorzugsweise sind alle Profilelemente 6 bis 9 identisch aufgebaut. Nachfolgend wird nur auf das Profilelement 6 eingegangen, wobei die Ausführungen betreffend das Profilelement 6 entsprechend auf die Profilelemente 7 bis 9 anwendbar sind. Die Fig. 15 zeigt mehrere schematische Seitenansichten des Profilelements 6. Nachfolgend wird auf die Fig. 14 und 15 gleichzeitig eingegangen.

Um eine übermäßige Krängung des Rumpfes 2 aufgrund einer auf das Seil 21 wirkenden Tragflächenzugkraft des Tragflügels 23 entgegenzuwirken, ist das Profilelement 6 geeignet, eine Abtriebskraft zu erzeugen, die der Krängung entgegenwirkt. Unter der "Krängung" ist vorliegend die Neigung des Wasserfahrzeugs 1 zur Seite, also eine Drehung um eine Längsachse 36 (Fig. 13) zu verstehen. Wird die Krängung zu groß, kann dies dazu führen, dass das Wasserfahrzeug 1 Schlagseite bekommt und im schlimmsten Fall kentert. Dies kann mit Hilfe des Profilelements 6 verhindert werden.

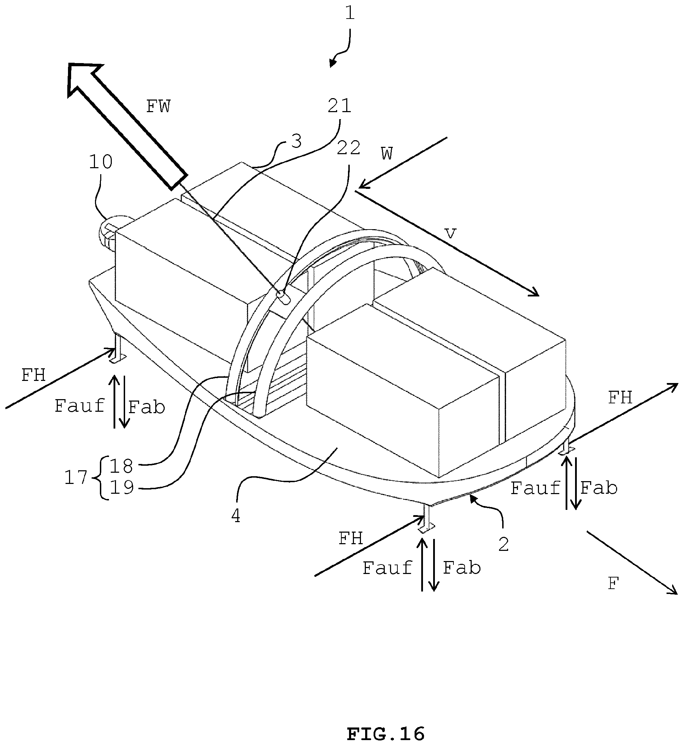

Das Profilelement 6 ist insbesondere ein sogenannter T-Foil und umfasst einen ersten Profilabschnitt 37 mit einer Anströmkante 38 sowie einer Abströmkante 39. Im Querschnitt ist der erste Profilabschnitt 37 vorzugsweise achsensymmetrisch aufgebaut. Der erste Profilabschnitt 37 kann einen tropfenförmigen Querschnitt umfassen. Das Profilelement 6 ist um eine Achse 40 drehbar in oder an dem Rumpf 2 gelagert. Hierdurch kann das gesamte Profilelement 6 um die Achse 40 verschwenken, wie in der Fig. 14 mit Hilfe eines Doppelpfeils 41 angedeutet ist. Es kann somit ein Anstellwinkel des ersten Profilabschnitts 37 um die Achse 40 eingestellt werden. Zum Rotieren des Profilelements 6 um die Achse 40 kann ein erster Aktor 42 vorgesehen sein. Der erste Aktor 42 kann ein Elektromotor sein, welcher von dem Bordcomputer 15 angesteuert wird. Durch die Rotation des gesamten Profilelements 6 um die Achse 40 mit Hilfe des ersten Aktors
42 wird die Richtung des Wasserfahrzeugs 1 gesteuert und/oder eine horizontale wirkende Gegenkraft FH (Fig. 16) zu dem Tragflügel 23 erzeugt.

Neben dem ersten Profilabschnitt 37 umfasst das Profilelement 6 einen senkrecht zu dem ersten Profilabschnitt 37 angeordneten zweiten Profilabschnitt 43 mit einer Anströmkante 44 und einer Abströmkante 45. Vorzugsweise sind zwei derartige zweite Profilabschnitte 43 vorgesehen, die beidseits des ersten Profilabschnitts 37 angeordnet sind. Nachfolgend wird jedoch auf nur einen zweiten Profilabschnitt 42 eingegangen. Der zweite Profilabschnitt 43 ist um eine senkrecht zu der Achse 40 angeordnete Achse 46 verschwenkbar. Hierzu kann der zweite Profilabschnitt 43 mit Hilfe einer Schubstange 47 aktuiert werden. Alternativ könnte eine Aktorik im Drehpunkt um die Achse 46 vorgesehen sein. Der Schubstange 47 ist ein zweiter Aktor 48 vorgesehen, der beispielsweise dazu eingerichtet ist, die Schubstange 47 in der Orientierung der Fig. 14 nach oben und nach unten zu bewegen. Der Aktor 48 kann beispielsweise ein Elektromotor sein, welcher von dem Bordcomputer 15 ansteuerbar ist. Der zweite Profilabschnitt 43 ist somit um die Achse 46 verschwenkbar, wie in der Fig. 14 mit Hilfe eines Doppelpfeils 49 angedeutet ist. Je nach Ansteuerung des zweiten Profilabschnitts 43 erzeugt dieser eine Auftriebskraft Fauf, oder eine Abtriebskraft Fab (Fig. 6). Die Abtriebskraft Fab wirkt dabei einer von dem Tragflügel 23 auf das Seil 21 aufgebrachten Zugkraft FW entgegen. Die Fig. 15 zeigt den zweiten Profilabschnitt 43 in drei unterschiedlichen Stellungen, nämlich in einer Neutralstellung, welche in der Fig. 15 mittig dargestellt ist, einer Auftriebsstellung, welche in der Fig. 15 linksseitig dargestellt ist und in welcher der Profilabschnitt 43 eine Auftriebskraft erzeugt, sowie in einer in der Fig. 15 rechts gezeigten Abtriebsstellung, in welcher der zweite Profilabschnitt 43 die Abtriebskraft Fab erzeugt.

Die Fig. 16 zeigt eine weitere perspektivische Ansicht des Wasserfahrzeugs 1, welche schematisch die auf das Wasserfahrzeug 1 wirkenden Kräfte darstellt. Wie zuvor erwähnt, bringt der Tragflügel 23 die Zugkraft FW auf das Seil 21 auf. Das Wasserfahrzeug 1 bewegt sich dadurch mit einer Geschwindigkeit v entlang der Fahrtrichtung F fort. Die ersten Profilabschnitte 37 der Profilelemente 6 bis 9 erzeugen entgegen die Zugkraft FZ wirkende horizontale Gegenkräfte, und die zweiten Profilabschnitte 43 der Profilelemente 6 bis 9 erzeugen je nach Erfordernis entweder Auftriebskräfte Fauf oder Abtriebskraft Fab und damit ein entsprechendes Moment um die Längsachse 36, um einer übermäßige Krängung des Rumpfes durch die Windkraft FW entgegenzuwirken.

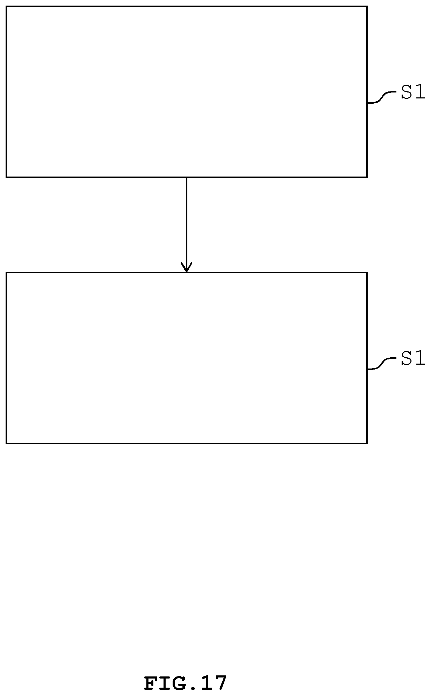

Die Fig. 17 zeigt ein schematisches Blockdiagramm einer Ausführungsform eines Verfahrens zum Steuern des Wasserfahrzeugs 1. In einem Schritt S1 wird der Rumpf 2 des Wasserfahrzeugs durch das Waser gezogen, wobei der Tragflügel 23 die Windkraft FW auf das an dem Rumpf 2 befestigte Seil 21 überträgt. In einem Schritt S2 wird die Krängung des Wasserfahrzeugs 1 mit Hilfe des Profilelements 6 bis 9, welches an dem Rumpf 2 befestigt ist und durch das Wasser gezogen wird, gesteuert, wobei das Profilelement 6 bis 9 eine Abtriebskraft Fab erzeugt, die der Krängung des Rumpfs 2 durch die Windkraft FW entgegenwirkt. Dabei kann die Abtriebskraft Fab in Abhängigkeit zumindest eines Parameters gesteuert werden, wobei der Parameter bevorzugt ausgewählt ist aus der folgenden Gruppe: die Windkraft FW, eine Stellung des Tragflügels 23 in der Luft, eine Windgeschwindigkeit, Positionskoordinaten des Wasserfahrzeugs 1, die Fahrtgeschwindigkeit des Wasserfahrzeugs 1 und/oder ein Gewicht des Wasserfahrzeugs 1.

Obwohl die vorliegende Erfindung anhand von Ausführungsbeispiele beschrieben wurde, ist sie vielfältig modifizierbar.

### BEZUGSZEICHENLISTE

- 1: Wasserfahrzeug
- 2: Rumpf
- 3: Nutzlast
- 4: Deck
- 5: Abdeckung
- 6: Profilelement
- 7: Profilelement
- 8: Profilelement
- 9: Profilelement
- 10: Hilfsantrieb
- 11: Motor
- 12: Batterie
- 13: Aktorik
- 14: Sensorik
- 15: Bordcomputer
- 16: Wirkverbindung
- 17: Verstelleinrichtung
- 18: Schienenelement
- 19: Schienenelement
- 20: Winde
- 21: Seil
- 22: Angriffspunkt
- 23: Tragflügel
- 24: Rumpf
- 25: Sensorik
- 26: Aktorik
- 27: Steuerungselektronik
- 28: Datenleitung
- 29: Tragfläche
- 30: Höhenruder
- 31: Seitenleitwerk
- 32: Seitenleitwerk
- 33: Umweltsensor
- 34: Kommunikationssystem
- 35: Flugzyklus
- 36: Achse
- 37: Profilabschnitt
- 38: Anströmkante
- 39: Abströmkante
- 40: Achse
- 41: Doppelpfeil
- 42: Aktor
- 43: Profilabschnitt
- 44: Anströmkante
- 45: Abströmkante
- 46: Achse
- 47: Schubstange
- 48: Aktor
- 49: Doppelpfeil

- a: Längsmittelline
- b: Quermittellinie
- A-D: Abstände
- F: Fahrtrichtung
- FA: Auftriebskraft
- Fab: Abtriebskraft
- Fauf: Auftriebskraft
- FH: horizontale Gegenkraft
- FW: Windkraft
- U: äußerer Umfang
- v: Geschwindigkeit
- W: Windrichtung
- α: Winkel

## Patentansprüche

1. Wasserfahrzeug (1), mit:
einem Rumpf (2) zur Aufnahme von zumindest einer Nutzlast (3), wobei der Rumpf (2) der einzige Rumpf des Wasserfahrzeugs (1) ist;
einem Tragflügel (23), welcher mithilfe eines Seils (21) mit dem Rumpf (2) verbunden und dazu eingerichtet ist, eine Windkraft (FW) auf das Seil (21) zu übertragen;
und
mehrere Profilelemente (6 - 9), welche an dem Rumpf (2) befestigt und jeweils dazu eingerichtet sind, bei der Fahrt durch das Wasser gezogen zu werden,
wobei die Profilelemente (6 - 9) jeweils einen ersten, im Wasser im Wesentlichen senkrechten Profilabschnitt (37) und einen im Wasser im Wesentlichen senkrecht zu dem ersten Profilabschnitt (37) angeordneten zweiten Profilabschnitt (43) umfassen, wobei das jeweilige gesamte Profilelement (6 - 9) um eine Achse (40) drehbar mit dem Rumpf (2) verbunden und durch Verdrehen des jeweiligen gesamten Profilelements (6 - 9) gegenüber dem Rumpfs (2) der Anstellwinkel des jeweiligen ersten Profilabschnitts (37) verstellbar ist, wobei der jeweilige zweite Profilabschnitt (43) gegenüber dem jeweiligen ersten Profilabschnitt (37) um eine weitere Achse (46) verschwenkbar gelagert ist,
wobei der jeweilige zweite Profilabschnitt (43) durch Verstellen seines Anstellwinkels dazu ansteuerbar ist, wahlweise eine Auftriebskraft (Fauf) für eine Gleitfahrt des Rumpfs und eine Abtriebskraft (Fab) derart zu erzeugen, dass die Auftriebs- und Abtriebskräfte (Fauf, Fab) ein Moment erzeugen, das einer Krängung des Rumpfs (2) durch die Windkraft (FW) entgegenwirkt.

2. Wasserfahrzeug nach Anspruch 1, ferner aufweisend eine Winde (20) zur Veränderung einer Länge des Seils (21).

3. Wasserfahrzeug nach Anspruch 2, wobei die Winde (20) dazu eingerichtet ist, das Seil (21) zu verlängern, wenn die Windkraft (FW) einen Schwellwert überschreitet und/oder wobei die Winde (20) dazu eingerichtet ist, den Tragflügel (23) in die Luft zu starten oder zu landen und/oder wobei die Winde (20) dazu eingerichtet ist, das Seil (21) zu verkürzen, um bei schwachem Wind den Tragflügel (23) in der Luft zu halten und/oder wobei die Winde (20) zur Stromerzeugung eingerichtet ist.

4. Wasserfahrzeug nach einem der vorhergehenden Ansprüche, wobei der Tragflügel (23) dazu eingerichtet ist, entlang eines vordefinierten Krafterzeugungszyklus (35) zu fliegen.

5. Wasserfahrzeug nach einem der vorhergehenden Ansprüche, wobei der Tragflügel (23) der Hauptantrieb des Wasserfahrzeugs (1) ist.

6. Wasserfahrzeug nach einem der vorhergehenden Ansprüche, wobei die Nutzlast (3) größer 10 Tonnen beträgt.

7. Wasserfahrzeug nach einem der vorhergehenden Ansprüche, wobei der Rumpf (2) eine Verstelleinrichtung (17) und einen Angriffspunkt (22) aufweist, an welchem das Seil (21) befestigt ist, wobei die Verstelleinrichtung (17) dazu eingerichtet ist, den Angriffspunkt (22) zu verstellen, um einen Hebel eines auf den Rumpf (2) wirkenden krängenden Moments zu reduzieren oder minimieren.

8. Verfahren zum Steuern eines Wasserfahrzeugs (1), welches einen einzigen Rumpf (2) aufweist, mit den Schritten:
Ziehen (S1) des Rumpfs (2) des Wasserfahrzeugs (1) durch das Wasser, wobei ein Tragflügel (23) eine Windkraft (FW) auf ein an dem Rumpf (2) befestigtes Seil (21) überträgt; und
Steuern (S2) einer Krängung des Wasserfahrzeugs (1) mithilfe von mehreren Profilelementen (6 - 9), welche an dem Rumpf (2) befestigt sind und durch das Wasser gezogen werden, wobei die Profilelemente (6 - 9) jeweils einen ersten, im Wasser im Wesentlichen senkrechten Profilabschnitt (37) und einen im Wasser im Wesentlichen senkrecht zu dem ersten Profilabschnitt angeordneten zweiten Profilabschnitt (43) umfassen, wobei das jeweilige gesamte Profilelement (6 - 9) um eine Achse (40) drehbar mit dem Rumpf (2) verbunden und durch Verdrehen des jeweiligen gesamten Profilelements (6 - 9) gegenüber dem Rumpfs (2) der Anstellwinkel des jeweiligen ersten Profilabschnitts (37) verstellbar ist, wobei der jeweilige zweite Profilabschnitt (43) gegenüber dem jeweiligen ersten Profilabschnitt (37) um eine weitere Achse (46) verschwenkbar gelagert ist,
wobei der jeweilige zweite Profilabschnitt (43) durch Verstellen seines Anstellwinkels dazu ansteuerbar ist, wahlweise eine Auftriebskraft (Fauf) für eine Gleitfahrt des Rumpfs und eine Abtriebskraft (Fab) derart zu erzeugen, dass die Auftriebs- und Abtriebskräfte (Fauf, Fab) ein Moment erzeugen, das einer Krängung des Rumpfs (2) durch die Windkraft (FW) entgegenwirkt.

9. Verfahren nach Anspruch 8, wobei die Abtriebskraft (Fab) in Abhängigkeit zumindest eines Parameters gesteuert wird, wobei der Parameter ausgewählt ist aus der Gruppe umfassend: die Windkraft (FW), eine Stellung des Tragflügels (23) in der Luft, eine Windgeschwindigkeit, Positionskoordinaten des Wasserfahrzeugs (1), Orientierung des Wasserfahrzeugs (1) im Raum, eine Fahrtgeschwindigkeit (v) des Wasserfahrzeugs (1) und/oder ein Gewicht des Wasserfahrzeugs (1).

## Claims

1. Watercraft (1), comprising:
a hull (2) for the accommodation of at least one payload (3), wherein the hull (2) is the only hull of the watercraft (1);
a wing (23) which is connected to the hull (2) by means of a rope (21) and is configured to transmit a wind force (FW) to the rope (21);
and
a plurality of profile elements (6 - 9) which are attached to the hull (2) and which are each configured to be pulled through the water while traveling,
wherein the profile elements (6 - 9) each comprise a first profile section (37), which is substantially perpendicular in the water, and a second profile section (43), which is arranged substantially perpendicularly in the water with respect to the first profile section (37), wherein the respective entire profile element (6 - 9) is rotatably connected to the hull (2) about an axis (40) and wherein the setting angle of the respective first profile section (37) is adjustable by rotating the respective entire profile element (6 - 9) with respect to the hull (2), wherein the respective second profile section (43) is rotatably supported with respect to the respective first profile section (37) about a further axis (46),
wherein the respective second profile section (43) is controllable by adjusting its setting angle for selectively generating an upward force (Fauf) for a planing of the hull and a downward force (Fab) in such a way that the upward forces and downward forces (Fauf, Fab) generate a moment which counteracts a heeling of the hull (2) generated by the wind force (FW).

2. Watercraft according to claim 1, further comprising a winch (20) for the alteration of a length of the rope (21).

3. Watercraft according to claim 2, wherein the winch (20) is configured to lengthen the rope (21) if the wind force (FW) exceeds a threshold value and/or wherein the winch (20) is configured to launch or to land the wing (23) in the air and/or wherein the winch (20) is configured to shorten the rope (21) in order to keep the wing (23) in the air during low wind conditions and/or wherein the winch (20) is configured to generate electricity.

4. Watercraft according to any one of the preceding claims, wherein the wing (23) is configured to fly along a predefined power generation cycle (35).

5. Watercraft according to any one of the preceding claims, wherein the wing (23) is the main propulsion of the watercraft (1).

6. Watercraft according to any one of the preceding claims, wherein the payload (3) is more than 10 tons.

7. Watercraft according to any one of the preceding claims, wherein the hull (2) comprises an adjusting device (17) and an engagement point (22) at which the rope (21) is attached, wherein the adjusting device (17) is configured to adjust the engagement point (22) in order to reduce or minimize a lever of a heeling moment acting on the hull (2).

8. Method of steering a watercraft (1) having a single hull (2), the method comprising the steps of:
pulling (S1) the hull (2) of the watercraft (1) through the water, wherein a wing (23) transmits a wind force (FW) to a rope (21) attached to the hull (2); and
controlling (S2) a heeling of the watercraft (1) by means of several profile elements (6 - 9) which are attached to the hull (2) and are pulled through the water, wherein the profile elements (6 - 9) each comprise a first profile portion (37) arranged substantially perpendicular in the water and a second profile portion (43) arranged substantially perpendicular in the water with respect to the first profile portion, wherein the respective entire profile element (6 - 9) is connected to the hull (2) so as to be rotatable about an axis (40) and wherein the setting angle of the respective first profile section (37) is adjustable by rotating the respective entire profile element (6 - 9) relative to the hull (2), wherein the respective second profile section (43) is mounted so as to be pivotable about a further axis (46) relative to the respective first profile section (37),
wherein the respective second profile section (43) is controllable by adjusting its setting angle in order to selectively generate an upward force (Fauf) for a planing of the hull and to generate a downward force (Fab) in such a way that the upward forces and downward forces (Fauf, Fab) generate a moment which counteracts a heeling of the hull (2) by the wind force (FW).

9. Method according to claim 8, wherein the downward force (Fab) is being controlled in dependence on at least one parameter, wherein the parameter is selected from the group comprising: the wind force (FW), a position of the wing (23) in the air, a wind speed, position coordinates of the watercraft (1), spatial orientation of the watercraft (1), a travelling speed (v) of the watercraft (1) and/or a weight of the watercraft (1).

## Revendications

1. Embarcation (1), comprenant :
une coque (2) destinée à la réception d'au moins une charge utile (3), dans laquelle la coque (2) est la seule coque de l'embarcation (1) ;
une aile (23) qui est reliée à la coque (2) au moyen d'un filin (21) et qui est conçue pour transmettre une force du vent (FW) au filin (21) ;
et
une pluralité d'éléments de profilé (6 - 9) qui sont fixés à la coque (2) et qui sont individuellement conçus théoriquement pour être tirés à travers l'eau pendant une navigation,
dans laquelle les éléments de profilé (6 - 9) comprennent individuellement une première section de profilé (37), qui est sensiblement perpendiculaire dans l'eau, et une seconde section de profilé (43), qui est disposée sensiblement perpendiculairement dans l'eau par rapport à la première section de profilé (37), dans laquelle tout l'élément de profilé respectif (6 - 9) est relié mobile en rotation à la coque (2) autour d'un axe (40) et dans laquelle l'angle de réglage de la première section de profilé respective (37) peut être réglé par une rotation de tout l'élément de profilé respectif (6 - 9) par rapport à la coque (2), dans laquelle la seconde section de profilé respective (43) est supportée mobile en rotation par rapport à la première section de profilé respective (37) autour d'un autre axe (46),
dans laquelle la seconde section de profilé respective (43) peut être commandée par un réglage de son angle de réglage pour générer de manière sélective une force vers le haut (Fauf) permettant un plané de la coque et une force vers le bas (Fab) d'une manière telle que les forces vers le haut et vers le bas (Fauf, Fab) génèrent un moment qui compense une gîte de la coque (2) générée par la force du vent (FW).

2. Embarcation selon la revendication 1, comprenant en outre un treuil (20) permettant la modification d'une longueur du filin (21).

3. Embarcation selon la revendication 2, dans laquelle le treuil (20) est conçu pour allonger le filin (21) si la force du vent (FW) dépasse une valeur seuil et/ou dans laquelle le treuil (20) est conçu pour faire décoller ou descendre l'aile (23) dans l'air et/ou dans laquelle le treuil (20) est conçu pour raccourcir le filin (21) afin de maintenir l'aile (23) dans l'air dans des conditions de faible vent et/ou dans laquelle le treuil (20) est conçu pour générer de l'électricité.

4. Embarcation selon l'une quelconque des revendications précédentes, dans laquelle l'aile (23) est conçue pour voler sur un cycle de génération de puissance prédéfini (35).

5. Embarcation selon l'une quelconque des revendications précédentes, dans laquelle l'aile (23) est la propulsion principale de l'embarcation (1).

6. Embarcation selon l'une quelconque des revendications précédentes, dans laquelle la charge utile (3) est supérieure à 10 tonnes.

7. Embarcation selon l'une quelconque des revendications précédentes, dans laquelle la coque (2) comprend un dispositif de réglage (17) et un point de prise (22) au niveau duquel est fixé le filin (21), dans laquelle le dispositif de réglage (17) est conçu pour régler le point de prise (22) afin de réduire ou de diminuer au maximum un levier d'un moment de gîte agissant sur la coque (2).

8. Procédé pour gouverner une embarcation (1) comportant une unique coque (2), le procédé comprenant les étapes consistant à :
tirer (S1) la coque (2) de l'embarcation (1) à travers l'eau, dans lequel une aile (23) transmet une force du vent (FW) à un filin (21) fixé à la coque (2) ; et
commander (S2) une gîte de l'embarcation (1) au moyen de plusieurs éléments de profilé (6 - 9) qui sont fixés à la coque (2) et qui sont tirés à travers l'eau, dans lequel les éléments de profilé (6 - 9) comprennent individuellement une première partie de profilé (37) disposée sensiblement perpendiculaire dans l'eau et une seconde partie de profilé (43) disposée sensiblement perpendiculaire dans l'eau par rapport à la première partie de profilé, dans lequel tout l'élément de profilé respectif (6 - 9) est relié à la coque (2) de façon à pouvoir tourner autour d'un axe (40) et dans lequel l'angle de réglage de la première section de profilé respective (37) peut être réglé par une rotation de tout l'élément de profilé respectif (6 - 9) par rapport à la coque (2), dans lequel la seconde section de profilé respective (43) est montée de façon à pouvoir pivoter autour d'un autre axe (46) par rapport à la première section de profilé respective (37),
dans lequel la seconde section de profilé respective (43) peut être commandée par un réglage de son angle de réglage afin, sélectivement, de générer une force vers le haut (Faut) permettant un plané de la coque et de générer une force vers le bas (Fab) d'une manière telle que les forces vers le haut et vers le bas (Fauf, Fab) génèrent un moment qui compense une gîte de la coque (2) par la force du vent (FW).

9. Procédé selon la revendication 8, dans lequel la force vers le bas (Fab) est commandée en fonction d'au moins un paramètre, dans lequel le paramètre est sélectionné dans le groupe comprenant : la force du vent (FW), une position de l'aile (23) dans l'air, une vitesse du vent, des coordonnées de position de l'embarcation (1), une orientation spatiale de l'embarcation (1), une vitesse de navigation (v) de l'embarcation (1) et/ou un poids de l'embarcation (1).
